# EUROPEAN PATENT SPECIFICATION

(11) **EP 1 269 556 B1**
(45) Date of publication and mention of the grant of the patent: **16.12.2009**
(21) Application number: 01915930.0
(22) Date of filing: 22.03.2001
(51) Int. Cl.: H01M 8/02

(54) **PLATE, PLATE ASSEMBLY AND ELECTROCHEMICAL CELL STACK**
PLATTE, PLATTENANORDNUNG UND ELEKTROCHEMISCHER ZELLENSTAPEL
PLAQUE, ENSEMBLE PLAQUE ET EMPILEMENT DE CELLULES ELECTROCHIMIQUES

(30) Priority: 22.03.2000 NL 1014722
(43) Date of publication of application: 02.01.2003
(73) Proprietor: Stichting Energieonderzoek Centrum Nederland, 1755 LE Petten (NL)
(72) Inventor: MALLANT, Ronald, Karel, Antoine, Marie, NL-1824 GP Alkmaar (NL)
(74) Representative: van Westenbrugge, Andries
(86) International application number: PCT/NL2001/000234
(87) International publication number: WO 2001/071836

(56) References cited:
- EP-A1- 0 774 794
- WO-A1-96/34421
- DE-A1- 4 237 602
- US-A- 5 108 849

## Description

The present invention relates to a plate provided with a fluid channel designed as a groove, said plate being suitable for forming part of an electrochemical cell stack, said plate being provided with an inlet and/or outlet adjoining said fluid channel, said inlet/outlet comprising a continuous opening which extends perpendicular to the surface of the said plate, said channel being provided, in the vicinity of the said inlet/outlet, with a cover which is designed as a sealing surface. A plate of this type is more particularly a separator plate in a fuel cell stack. A number of channels which extend parallel to one another, for example in the form of a zigzag from one side of the separator plate to the other side of the separator plate, thus covering the maximum possible area, are formed in a separator plate of this type by milling or in some other way. Channels of this type can be used for the anode gas or cathode gas and may be of any conceivable shape, for example may be U-shaped or V-shaped or trapezium-shaped.

During assembly to form an electrochemical cell, a further plate is placed onto a plate of this type and it is necessary to seal the various components of the cell with respect to one another. In particular, it is important to seal the electrochemically active region and the gas-inlet opening which is formed in the plates with respect to one another and with respect to the outside of the cell stack. This seal is produced by fitting an O-ring or the like, for which purpose it is necessary to have zones which are flat with respect to one another and lie around regions to be sealed. If an O-ring or the like is used, without further measures, and an O-ring of this type is laid over the groove or grooves, in the event of deformation this O-ring will be pressed into the grooves and at the location of the grooves it is no longer possible to ensure a complete seal and completely unimpeded flow of gases or the like.

Therefore, it is proposed in the prior art, for example US Patent 5,108,849 to arrange a separate bridge part where the grooves open out into the inlet/outlet. This bridge part is a small metal plate which is placed in a slightly recessed part of the separator plate. As a result, the cross-sectional area of the grooves is not affected or is scarcely affected, and there is sufficient supporting area to function as a sealing surface for, by way of example, an O-ring or the like.

The fitting of such an auxiliary part leads to a sealing problem between the auxiliary part and the separator plate. Moreover, high demands are imposed on such small plates or bridge parts, since they have to be thin. Consequently, they will generally be made from metallic material, which may cause corrosion problems. Moreover, this has the drawback, when producing separator plates on a large scale, that small plates or bridge parts of this type have to be positioned separately.

WO 96/34421 in the name of Stichting Energieonderzoek Centrum Nederland, discloses a layered structure which delimits fluid channels. A number of plates with continuous holes with different patterns are laid on top of one another in order in this way to delimit channels. However, at least three plates are required in order to combine an inlet/outlet for fluid and a seal. As a result, the costs of a structure built up in this way are considerably increased.

The object of the present invention is to avoid this drawback.

In a plate as described above, this object is realised in that said cover comprises a cover which is integral with said plate material. According to the invention, the bridge part is designed integrally with the relevant plate. This eliminates problems with corrosion while, moreover, it is not necessary for the bridge part to be accurately positioned, since it forms a component of the corresponding plate. It is possible for the grooves to extend as drilled holes through the material of the plate. However, this is relatively complicated, and it is preferable for the bridge part to be designed as a recess on the other side thereof. This means that the bridge part has a limited thickness which corresponds, for example, to half the thickness of the plate material. In this case, the recess may be provided with thickened portions which function as support points, so that the forces exerted by the seal do not cause the bridge part to bend or break.

In this way, firstly sufficient strength is imparted for it to function as a sealing surface, and secondly it is ensured that there is sufficient clear cross-sectional area to allow unimpeded flow of the corresponding fluid.

Production can be simplified further if there is a further opening, which extends all the way through the relevant plate, between the bridge part and the end of the groove or grooves.

The plate described above can particularly efficiently be produced on a large scale using, for example, injection-moulding of electrically conductive plastics material. This applies in particular if the plate is used for a fuel cell which operates at a relatively low temperature. Naturally, a suitable plastic has to be selected for the injection-moulding of plates of this type.

The plates can be joined to one another by welding, but it is also possible to use types of adhesive for this purpose and more particularly to use types of adhesive which conduct heat and current.

The invention also relates to an assembly comprising two plates as described above, these plates being attached to one another with the grooves facing away from one another. Cooling channels may be incorporated in the space between the plates.

It will be understood that an assembly of this type can particularly effectively be combined with a membrane electrode assembly (MEA). In this way, the number of components of an electrochemical cell stack is considerably restricted.

The invention will be explained in more detail below with reference to an exemplary embodiment which is illustrated in the drawing, in which:
Fig. 1 shows a plan view of a first plate according to the invention;
Fig. 2 shows a view from below of a second plate according to the invention;
Fig. 3 shows a perspective view of detail III from Fig. 2; and
Fig. 4 shows a perspective, partially cut-away view of a plate assembly according to the invention.

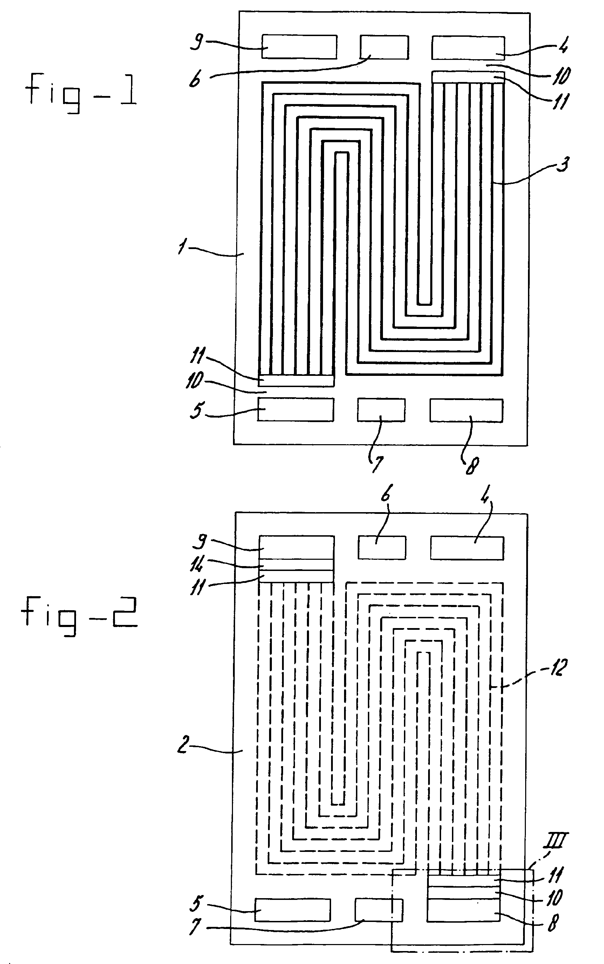

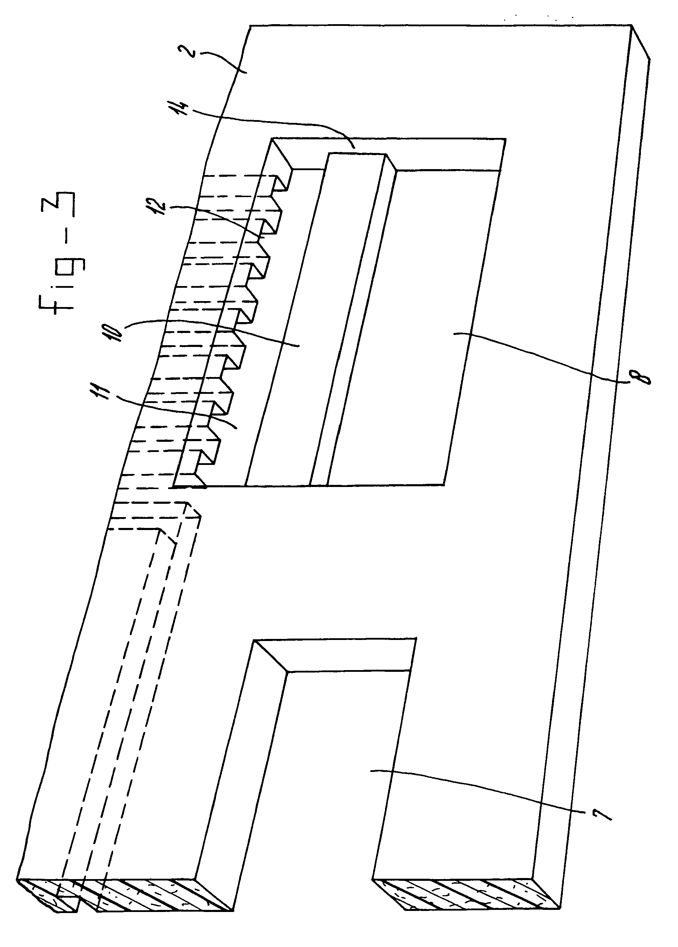

In Fig. 1, a first separator plate according to the invention is denoted overall by 1. It may be a plate which consists of a mixture of plastic and graphite and is produced, for example, by injection-moulding. There are openings at the edge of this separator plate. 4 denotes an inlet opening for anode gas, while 5 denotes the outlet opening for this gas. Openings 6-9 are also present, but are not shown as being connected in further detail. A number of grooves or channels 13 extend between openings 4 and 5. These grooves or channels are of U-shaped design and are open at the top in the plane of the drawing shown in Fig. 1. 11 denotes a continuous auxiliary opening. 10 denotes a bridge part which comprises thinned material, as can be seen from Fig. 3. It can be seen from this figure that this bridge part 10 extends only over approximately half the thickness of the plate 1. The remaining part creates a recess 14. As a result, gas emanating from the grooves 3 can flow without obstacle to or from opening 5.

Fig. 2 shows a further separator plate 2, which is provided with the same openings 4-9. This plate is viewed from the rear side, which means that the U-shaped grooves or channels 12 arranged therein are shown by dashed lines, since they are open towards the underside of the plane of the drawing. Opening 8 is an inlet channel for cathode gas, while opening 9 is an outlet channel. In this plate too, there is a bridge part 10 and an auxiliary opening 11. Recess 14 faces towards the top side.

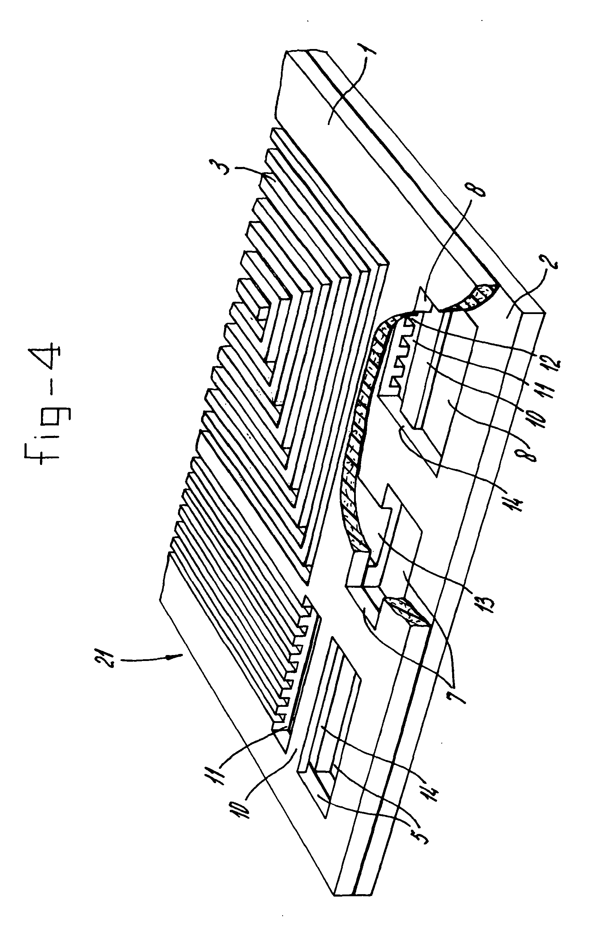

A separator plate assembly is shown in Fig. 4. In this assembly, the plates 1 and 2 illustrated in Fig. 1 and 2 are arranged against one another, and more particularly are attached to one another by welding, in such a manner that the grooves or channels 3, 12 always lie on the outer side. The active part of the cell, i.e. the electrode assembly, can be arranged on the grooves 3 or 12, with the result that anode or cathode gas can be brought into active communication with the electrode in question.

It can be seen from Fig. 4 that openings 6 and 7 are connected to a further channel, namely a cooling channel 13, which extends between the plates. The plates shown in this figure can be produced in a simple way by injection-moulding, for example. Assembly can then take place. It is not necessary to add further components during assembly. After assembly, combination with further membrane electrode assemblies is possible. The seal between the openings 4-8 and membrane electrode assemblies of this nature is not shown but may comprise any seal which is known in the prior art. The bridge parts ensure that the sealing surface is sufficiently stable, in order to prevent gases from escaping from the separator plate assemblies.

It will be understood that the above inventive idea can be applied to all kinds of plate structures in the prior art in which hitherto separate bridge parts have been used. Integration allows the production of connections of grooves or channels to inlet/outlet openings to be considerable simplified. Naturally, various grooves may be present.

Variants which lie within the scope of the appended claims will be immediately obvious to the person skilled in the art on reading the above description.

## Claims

1. Plate (1, 2) provided with a fluid channel designed as a groove (3), said plate being suitable for forming part of an electrochemical cell stack, said plate being provided with an inlet (4, 8) and/or outlet (5, 9) adjoining said fluid channel, said inlet/outlet comprising a continuous opening which extends perpendicular to the surface of the said plate, said channel being provided, in the vicinity of the said opening, with a cover (10) which is designed as a sealing surface, **characterized in that** said cover comprises a cover (10) which is integral with said plate material and comprises thinned material to delimit a recess (14) in the said plate material.

2. Plate according to Claim 1, wherein the said opening comprises at least two parts, a first part extending through the plane of the plate and a second part which comprises said recess (14) with cover (10), the part of the plate which lies opposite the said cover being provided with grooves (3, 12) opening out into the said recess.

3. Plate according to Claim 2, wherein said opening comprises a third part, adjacent to said recess and remote from said part, said third part comprising an opening extending through said plate and into which said groove opens.

4. Plate according to one of the preceding claims, being injection-moulded.

5. Assembly (21) comprising two plates (1, 2) according to one of the preceding claims which bear against one another, said grooves (3, 12) being arranged on the sides of the plates which face away from one another.

6. Assembly according to Claim 5, wherein channels (13) for a further medium are arranged between the plates.

7. Assembly according to Claim 5 or 6, wherein the said plates are joined by welding.

8. Assembly according to one of Claims 5-7, wherein the said plates are joined by adhesive bonding.

9. Electrochemical cell stack, comprising membrane electrode assemblies and plate assemblies according to one of Claims 5-8.

## Patentansprüche

1. Platte (1, 2) mit einem Fluidkanal, der als Rinne (3) ausgebildet ist, wobei die Platte zum Ausbilden eines Teils eines elektrochemischen Zellenstapels geeignet ist, die Platte mit einem Einlass (3, 8) und/oder einem Auslass (5, 9) benachbart zu dem Fluidkanal ausgestaltet ist, der Einlass/Auslass eine durchgängige Öffnung umfasst, die sich senkrecht zu der Oberfläche der Platte erstreckt, und der Kanal in der Nähe der Öffnung mit einer Abdeckung (10) ausgestaltet ist, die als Abdichtungsoberfläche ausgestaltet ist, **dadurch gekennzeichnet, dass** die Abdeckung eine Abdeckung (10) umfasst, die mit dem Plattenmaterial einteilig ausgestaltet ist und ein verschmälertes Material umfasst, um eine Aussparung (14) in dem Plattenmaterial zu begrenzen.

2. Platte nach Anspruch 1, wobei die Öffnung mindestens zwei Teile umfasst, einen ersten Teil, der sich durch die Ebene der Platte erstreckt, und einen zweiten Teil, der die Aussparung (14) mit der Abdeckung (10) umfasst, wobei der Teil der Platte, der der Abdeckung gegenüberliegt, mit Rinnen (3, 12) ausgestaltet ist, die sich in die Aussparung hinein öffnen.

3. Platte nach Anspruch 2, wobei die Öffnung einen dritten Teil umfasst, der benachbart zur Aussparung und entfernt gelegen von dem Teil vorgesehen ist, wobei der dritte Teil eine Öffnung umfasst, die sich durch die Platte hindurch erstreckt und in die sich die Rinne öffnet.

4. Platte nach einem der vorangehenden Ansprüche, die durch ein Spritzgussverfahren ausgebildet ist.

5. Vorrichtung (21) mit zwei Platten (1, 2) gemäß einem der vorangehenden Ansprüche, die aufeinander aufliegen, wobei die Rinnen (3, 12) auf den Seiten der Platten angeordnet sind, die voneinander weg gerichtet sind.

6. Vorrichtung nach Anspruch 5, wobei Kanäle (13) fiir ein weiteres Medium zwischen den Platten angeordnet sind.

7. Vorrichtung nach Anspruch 5 oder 6, wobei die Platten durch Schweißen miteinander verbunden sind.

8. Vorrichtung nach einem der Ansprüche 5-7, wobei die Platten durch Klebeverbinden miteinander verbunden sind.

9. Elektrochemischer Zellenstapel mit Membranelektroden-Vorrichtungen und Plattenvorrichtungen gemäß einem der Ansprüche 5-8.

## Revendications

1. Plaque (1, 2) pourvue d'un canal de fluide conçu sous la forme d'une rainure (3), ladite plaque étant appropriée pour la formation d'une partie d'une pile de cellules électrochimiques, ladite plaque étant pourvue d'une entrée (4, 8) et/ou d'une sortie (5, 9) adjacente audit canal de fluide, ladite entrée/sortie comportant une ouverture continue qui s'étend perpendiculairement à la surface de ladite plaque, ledit canal étant pourvu, au voisinage de ladite ouverture, d'un couvercle (10) qui est conçu comme une surface d'étanchéité, **caractérisée en ce que** ledit couvercle comporte un couvercle (10) qui est d'un seul tenant avec la matière de ladite plaque et comporte de la matière amincie afin de délimiter un renfoncement (14) dans la matière de ladite plaque.

2. Plaque selon la revendication 1, dans laquelle ladite ouverture comporte au moins deux parties, une première partie s'étendant à travers le plan de la plaque et une deuxième partie qui comporte ledit renfoncement (14) avec le couvercle (10), la partie de la plaque qui s'étend à l'opposé dudit couvercle étant pourvue de rainures (3, 12) s'ouvrant dans ledit renfoncement.

3. Plaque selon la revendication 2, dans laquelle ladite ouverture comporte une troisième partie, adjacente audit renfoncement et éloignée de ladite partie, ladite troisième partie comportant une ouverture s'étendant à travers ladite plaque et dans laquelle ladite rainure s'ouvre.

4. Plaque selon l'une quelconque des revendications précédentes, qui est moulée par injection.

5. Ensemble (21) comportant deux plaques (1, 2) selon l'une quelconque des revendications précédentes qui portent l'une contre l'autre, lesdites rainures (3, 12) étant disposées sur les côtés des plaques qui sont orientés à l'écart l'un de l'autre.

6. Ensemble selon la revendication 5, dans lequel des canaux (13) pour un autre fluide sont disposés entre les plaques.

7. Ensemble selon la revendication 5 ou 6, dans lequel lesdites plaques sont reliées par soudage.

8. Ensemble selon l'une des revendications 5 à 7, dans lequel lesdites plaques sont reliées par collage.

9. Pile électrochimique de cellules, comportant des ensembles d'électrodes à membrane et des ensembles de plaques selon l'une des revendications 5 à 8.
